# EUROPEAN PATENT APPLICATION

(11) **EP 2 148 383 A1**
(43) Date of publication of application: **27.01.2010**
(21) Application number: 08740579.1
(22) Date of filing: 17.04.2008
(51) Int. Cl.: H01M 8/02, H01B 1/06, H01M 4/86, H01M 8/10

(54) **POLYMER ELECTROLYTE MATERIAL AND MEMBRANE-ELECTRODE ASSEMBLY FOR FUEL CELL USING THE SAME**

(30) Priority: 18.04.2007 JP 2007109848
(71) Applicant: National University Corporation Shizuoka University, Shizuoka-shi, Shizuoka 422-8529 (JP); Toyota Jidosha Kabushiki Kaisha, Toyota-shi Aichi 471-8571 (JP)
(72) Inventor: FUJINAMI, Tatsuo, Hamamatsu-shi Shizuoka 432-8561 (JP); KUROKAWA, Tadao, Hamamatsu-shi Shizuoka 432-8561 (JP); TAKAMI, Masayoshi, Toyota-shi Aichi 471-8571 (JP)
(74) Representative: Duckworth, Timothy John
(86) International application number: PCT/JP2008/057509
(87) International publication number: WO 2008/133177

(57) **Abstract**

The present invention is to provide a polymer electrolyte material capable of causing interaction with a hydrocarbon polymer electrolyte and ensuring bonding ability between a polymer electrolyte membrane and a catalyst layer as well as having excellent gas permeability, and a membrane electrode assembly for fuel cell using the same. A polymer electrolyte material comprises at least a first repeating unit containing a Si-O bond which forms a main backbone and a second repeating unit containing an aromatic ring and a proton-conducting group, and a membrane electrode assembly for fuel cell comprises a polymer electrolyte membrane and/or a catalyst layer containing the polymer electrolyte material.

## Description

### Technical Field

The present invention relates to a polymer electrolyte material and a membrane electrode assembly for fuel cell using the same.

### Background Art

Fuel cells convert chemical energy directly into electrical energy by providing fuels and oxidants to two electrically-connected electrodes, and causing electrochemical oxidation of the fuels. Unlike thermal power, the fuel cells show high energy conversion efficiency since it is not subject to the restriction of Carnot cycle. The fuel cells generally have a structure provided with a plurality of stacked unit cells, each having a fundamental structure of a membrane electrode assembly in which an electrolyte membrane is interposed between a pair of electrodes. In particular, a solid polymer electrolyte fuel cell using a solid polymer electrolyte membrane as the electrolyte membrane has advantages in easiness to downsize, workability at low temperature and the like, and hence attracts attention particularly to employment of the solid polymer electrolyte fuel cells as portable and mobile power supply.

In the solid polymer electrolyte fuel cells, reaction of Formula (5) proceeds at an anode (fuel electrode).

H₂ → 2H⁺ + 2e⁻ (5)

An electron generated in Formula (5) reaches a cathode (oxidant electrode) after passing through an external circuit and working at an outside load. Then, protons generated in Formula (5) in a state of hydration with water move inside of the solid polymer electrolyte membrane from its anode side to its cathode side by electro-osmosis.
On the other hand, a reaction of Formula (6) proceeds at the cathode.

4H⁺ + O₂ + 4e⁻ → 2H₂O (6)

A unit cell mounted on a general solid polymer electrolyte fuel cell is provided with a membrane electrode assembly, wherein electrodes that a catalyst layer and a gas diffusion layer are laminated in this order are disposed respectively on both surfaces of a solid polymer electrolyte membrane (hereinafter, it may be referred to as a polymer electrolyte membrane), and has a structure provided with a separator which defines gas passages to interpose the membrane electrode assembly.

The catalyst layers provided on both surfaces of the polymer electrolyte membrane also contain a polymer electrolyte material (hereinafter, it may be referred to as a polymer electrolyte for electrode) for the purpose of ensuring proton conductance between the polymer electrolyte membrane and the catalyst layer, proton conductance in the catalyst layer, bonding ability between the polymer electrolyte membrane and the catalyst layer, and binding property such as catalyst particles contained in the catalyst layer.

The polymer electrolyte membrane requires gas sealing property which isolates fuels and oxidants respectively provided to a fuel electrode and an oxidant electrode together with proton conductance which conducts protons generated at the fuel electrode to the oxidant electrode side. On the other hand, the polymer electrolyte for electrode contained in the catalyst layer requires gas permeability to ensure gas diffuseness in the catalyst layer together with proton conductance which conducts protons generated on catalyst particles to the polymer electrolyte membrane, or protons moved in the polymer electrolyte membrane to catalyst particles.
As described above, different properties are required for the polymer electrolyte material constituting the polymer electrolyte membrane and the polymer electrolyte material constituting the catalyst layer.

As the solid polymer electrolyte, there has been conventionally and preferably used a fluorinated polymer electrolyte such as perfluorocarbon sulfonic acid resins which are represented by Nafion (product name, manufactured by DuPont), Aciplex (product name, manufactured by Asahi Kasei Co., Ltd.) and Flemion (product name, manufactured by Asahi Glass Co., Ltd.) because of its excellent properties such as proton conductance and chemical stability which are required for the electrolyte.

However, fluorinated polymer electrolytes are one of the factors that prevent cost reduction of fuel cells because of extremely expensive prices thereof. In addition, fluorinated polymer electrolytes may increase environmental burden as containing fluorine. Moreover, fluorine in fluorinated polymer electrolytes may generate hydrofluoric acid (HF) by reacting with hydrogen peroxide radical or the like which is generated as a result of electric generation of fuel cells. The hydrofluoric acid may corrode metals (for example, metal separators or the like) in cells of fuel cells, or may corrode an incinerator upon incineration.

Therefore, researches and developments of a polymer electrolyte which is low cost and has a low content of fluorine compared to the fluorinated polymer electrolytes described above have been promoted. Examples of the polymer electrolyte include hydrocarbon polymer electrolytes in which proton-conducting groups such as sulfonic acid groups, carboxyl groups and phosphoric acid groups are introduced into hydrocarbon polymers containing aromatic rings or imide rings in a main chain such as polyether ether ketone (PEEK), polyether ketone, polyether sulfone (PES) and polyphenylene sulfide (PPS).

However, the hydrocarbon polymer electrolyte as described above has low gas permeability so that there is a problem that gas diffuseness of a catalyst layer decreases when used as a polymer electrolyte for electrode. Particularly, in the oxidant electrode, water is generated by the electrode reaction and water moves from the fuel electrode side together with proton conduction, thus, so-called "flooding", in which the electrode is flooded, is easily caused. In addition to this, oxygen molecules having larger size of molecules and lower diffuseness compared to hydrogen are supplied to the oxidant electrode as electrode reaction gas. Accordingly, in the oxidant electrode, an improvement of diffuseness of reaction gas is further required compared to the fuel electrode. Therefore, the use of the hydrocarbon polymer electrolyte for a polymer electrolyte membrane, and the use of the fluorinated polymer electrolyte as a polymer electrolyte for electrode have been attempted.
However, there is a problem that the polymer electrolyte membrane and the catalyst layer formed by such different materials have poor bonding ability and thus proton conductance and water mobility between the polymer electrolyte membrane and the catalyst layer easily lower. Also, even when a fluorinated polymer electrolyte is used as the polymer electrolyte for electrode, gas diffuseness of the catalyst layer to be obtained is not sufficient.

On the other hand, as a low-cost polymer electrolyte material, researches and developments of a silicon compound have been performed (for example, Patent Literatures 1 and 2).
The inventors of the present invention have also already filed applications for inventions of electrolyte materials comprising an organosilicon polymer (for example, Patent Literatures 3 and 4). The electrolyte material disclosed in Patent Literature 3 comprises an organosilicon polymer having a linking group having two or less Si-O bonds in a main backbone. Specifically, there is an electrolyte material comprising a constituent unit wherein a sulfonic acid group is bound to Si of the Si-O bond which forms the main backbone through an alkyl group, and a constituent unit wherein an aliphatic group such as an alkyl group is bound to Si of the Si-O bond which forms the main backbone.

The electrolyte material disclosed in Patent Literature 4 comprises an organosilicon polymer having a linking group having two or less Si-O bonds in a main backbone, a carbon-carbon double bond and a proton-conducting group. Specifically, there is an electrolyte material comprising a constituent unit wherein a sulfonic acid group is bound to Si of the Si-O bond which forms the main backbone through an alkyl group, a constituent unit wherein an alkyl group is bound to Si of the Si-O bond which forms the main backbone, and a constituent unit wherein an alkenyl group is bound to Si of the Si-O bond which forms the main backbone.

[Patent Literature 1] Japanese Patent Application Laid-Open (JP-A) No. 2005-276721
[Patent Literature 2] JP-A No. 2004-346316
[Patent Literature 3] JP-A No. 2005-190813
[Patent Literature 4] JP-A No. 2006-134765

### Summary of Invention

### Technical Problem

Although the electrolyte materials disclosed in the above Patent Literatures 3 and 4 have excellent gas permeability, heat resistance and chemical stability, in the case that these electrolyte materials are used as electrolyte materials for electrode and in combination with the hydrocarbon polymer electrolyte membrane containing aromatic rings or imide rings as described above in the main backbone, interaction with the hydrocarbon polymer electrolyte membrane is small, thus sufficient bonding ability may not be obtained in an interface between the polymer electrolyte membrane and the catalyst layer.

The present invention has been made in view of the above circumstances. An object of the present invention is to provide a polymer electrolyte material capable of causing interaction with a hydrocarbon polymer electrolyte and ensuring bonding ability between a polymer electrolyte membrane and a catalyst layer as well as having excellent gas permeability.

### Solution to Problem

A polymer electrolyte material of the present invention comprises at least a first repeating unit containing a Si-O bond which forms a main backbone and a second repeating unit containing an aromatic ring and a proton-conducting group.

The polymer electrolyte material of the present invention has smaller rotational energy barrier of the Si-O bond of the main backbone derived from the first repeating unit than that of other bonds such as a carbon-carbon bond, thus having high gas permeability (including water vapor permeability) and excellent diffuseness of reaction gas, and diffuseness and discharging ability of moisture compared to a general fluorinated polymer electrolyte and hydrocarbon polymer electrolyte.
Further, the aromatic ring derived from the second repeating unit causes interaction with the aromatic ring included in a general hydrocarbon polymer electrolyte, thus the polymer electrolyte material of the present invention has high affinity with the hydrocarbon polymer electrolyte. Therefore, the polymer electrolyte membrane or the catalyst layer containing the polymer electrolyte material of the present invention can obtain high bonding ability with the catalyst layer or the polymer electrolyte membrane containing the hydrocarbon polymer electrolyte.

As the first repeating unit, there may be at least one kind of repeating unit containing a siloxane structure represented by the following Formula (1).

[Chemical formula 1]

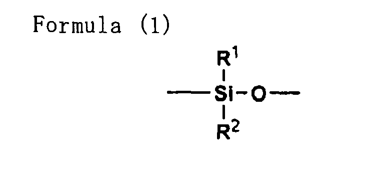

wherein, R¹ and R² are respectively one selected from the group consisting of an aliphatic group and an aromatic group.

Also, as the second repeating unit, there may be at least one kind of repeating unit containing an aromatic ring which forms the main backbone. Specifically, there may be a repeating unit having a structure in which the proton-conducting group is bound to the aromatic group which forms the main backbone directly or indirectly through a linking group.

From the viewpoint of flexibility, it is preferable that the polymer electrolyte material of the present invention further comprises at least one kind of third repeating unit containing a structure represented by the following Formula (3) which forms the main backbone.

[Chemical formula 2]

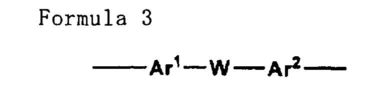

wherein, each of Ar¹ and Ar² is an aromatic ring; and W is at least one selected from -O-, -S-, -CO-, - SO-, a single bond, -C(CH₃)₂- and -C(CF₃)₂-.

The polymer electrolyte material of the present invention as described above can be used for various purposes in a wide-ranging field. In particular, by using the polymer electrolyte material as a material constituting a membrane electrode assembly for fuel cell, an excellent effect can be obtained. Specifically, the polymer electrolyte material can be contained in a polymer electrolyte membrane and a catalyst layer constituting the membrane electrode assembly for fuel cell. More specifically, by being provided with a catalyst layer containing the above polymer electrolyte material and a hydrocarbon polymer electrolyte membrane, a membrane electrode assembly for fuel cell having excellent gas diffuseness of the catalyst layer and showing high power generation efficiency as well as having excellent bonding ability between the electrolyte membrane and the catalyst layer and exhibiting high proton conductance can be obtained.

### Advantageous Effects of Invention

The present invention provides a polymer electrolyte material capable of causing interaction with a hydrocarbon polymer electrolyte and having excellent bonding ability with a membrane containing the hydrocarbon polymer electrolyte as well as having excellent gas permeability.

### Brief Description of Drawings

FIG. 1 is a cross-sectional view showing an embodiment of a membrane electrode assembly for fuel cell of the present invention.
FIG. 2 is a graph showing a result of electric performance test in Examples.

### Reference Signs List

- 1:: electrolyte membrane
- 2:: fuel electrode (anode)
- 3:: oxidant electrode (cathode)
- 4a:: fuel electrode side catalyst layer
- 4b:: oxidant electrode side catalyst layer
- 5a:: fuel electrode side gas diffusion layer
- 5b:: oxidant electrode side gas diffusion layer
- 6:: membrane electrode assembly
- 7a:: fuel electrode side separator
- 7b:: oxidant electrode side separator
- 8a:: fuel gas passage
- 8b:: oxidant gas passage
- 100:: unit cell.

### Description of Embodiments

The polymer electrolyte material of the present invention comprises at least a first repeating unit containing a Si-O bond which forms a main backbone and a second repeating unit containing an aromatic ring and a proton-conducting group.

The polymer electrolyte material of the present invention has smaller rotational energy barrier of the Si-O bond of the main backbone derived from the first repeating unit than that of other bonds such as a carbon-carbon bond, thus having high gas permeability compared to the fluorinated polymer electrolyte represented by Nafion and the hydrocarbon polymer electrolyte described above such as sulfonated-PEEK. Since the Si-O bond has higher bond energy between atoms than a carbon bond, it has advantage in heat resistance.

In addition, the polymer electrolyte material of the present invention contains aromatic rings in a main chain or side chain, which derives from the second repeating unit, and causes interaction with a hydrocarbon polymer electrolyte containing aromatic rings, thus having high adhesion property with the hydrocarbon polymer electrolyte. Also, since the polymer electrolyte material includes the aromatic rings in the main chain or side chain, particularly in the main chain, heat resistance of the polymer electrolyte can be further improved.

As described above, since the polymer electrolyte material of the present invention has excellent adhesion property with the hydrocarbon polymer electrolyte, a polymer electrolyte membrane or a catalyst layer which exhibit high bonding ability with a catalyst layer containing a hydrocarbon polymer electrolyte or a hydrocarbon polymer electrolyte membrane can be obtained when the polymer electrolyte material is contained in the polymer electrolyte membrane or the catalyst layer. That is, although different kinds of polymer electrolytes are used for the electrolyte membrane and catalyst layer, the present invention can provide a membrane electrode assembly for fuel cell which has excellent proton conductance and water mobility between the polymer electrolyte membrane and catalyst layer, hardly causes peeling between the polymer electrolyte membrane and the catalyst layer, and exhibits high power generation performance.
Also, since the polymer electrolyte material of the present invention has excellent heat resistance, high durability can be exhibited even when the polymer electrolyte material is used under high-temperature condition over a long time.

Further, the polymer electrolyte material of the present invention has excellent gas permeability, thereby being able to remarkably improve gas diffuseness in the catalyst layer when used as a polymer electrolyte for electrode. In a catalyst layer having low gas diffuseness, diffusion of gas is to be rate-limiting for electrode reaction so that the electrode reaction does not efficiently progress. To the contrary, by using the polymer electrolyte material of the present invention, a catalyst layer having excellent gas diffuseness and power generation efficiency can be provided. The catalyst layer having excellent gas diffuseness has also high diffuseness of water vapor, thus homogenization of the distribution of water in the catalyst layer and improvement of drainage ability can be expected.

From the viewpoint of such gas permeability, the polymer electrolyte material of the present invention can further improve the effect thereof particularly by being used as the polymer electrolyte for electrode.
In particular, using the polymer electrolyte material of the present invention as the polymer electrolyte for electrode in the catalyst layer of the oxidant electrode is effective. This is because diffuseness of reaction gas in the oxidant electrode easily lowers compared to that of the fuel electrode since the size of an oxygen molecule is larger than that of a hydrogen molecule, its diffuseness is poor, and the oxidant electrode is easily blocked by the water produced by the electrode reaction and the water which moves from the fuel electrode together with protons.

The polymer electrolyte material of the present invention is not particularly limited as long as it has the above characteristics. Hereinafter, repeating units constituting the polymer electrolyte material of the present invention will be described in detail.

The first repeating unit is not limited as long as it contains the Si-O bond as a main backbone-forming section. Examples of preferred first repeating units include ones containing a siloxane structure represented by the following Formulae (1) and (2).

[Chemical formula 1]

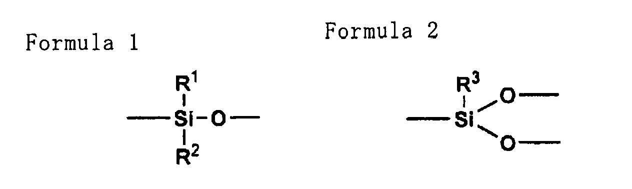

In Formula (1), R¹ and R² are respectively one selected from the group consisting of an aliphatic group and an aromatic group. In Formula (2), R³ is one selected from the group consisting of an aliphatic group and an aromatic group.
In the above siloxane structures, the main backbone is formed by the bond of bonding hands in both ends of the Si-O.

The above aliphatic group and aromatic group are not particularly limited. Examples of the aliphatic group include an alkyl group, an alkenyl group, an aralkyl group and substitutions thereof. Examples of the aromatic group include a phenyl group, a naphthyl group, a tolyl group, a xylyl group, substitutions thereof, and a group having an aliphatic group such as an alkyl group bound on any of these aromatic rings. The aliphatic group as used herein may be in a branched form or a ring form besides a straight-chain form, may contain a hetero atom other than carbon and hydrogen, and may be, for example, ketone, ether or amine.

From the viewpoint of flexibility of molecules, it is preferable that each of R¹, R² and R³ is an alkyl group. Specifically, there may be a methyl group, an ethyl group, a propyl group and a butyl group.
Also, from the viewpoint of gas diffuseness, among the above siloxane structures, the siloxane structure represented by Formula (1) is preferable.

As the main backbone-forming section, which forms the chain structure of the main backbone, the first repeating unit may contain an aliphatic group and an aromatic group besides the siloxane structures represented by the above Formulae (1) and (2) for the purpose of imparting and improving flexibility, synthesis ability of the polymer electrolyte.

The second repeating unit is not particularly limited as long as it has an aromatic ring and a proton-conducting group. In the second repeating unit, the aromatic ring may be either the main backbone-forming section or a side chain-forming section. Particularly, it is preferable that the aromatic ring is the main backbone-forming section from the viewpoint of heat resistance of the polymer electrolyte material to be obtained and interaction with the hydrocarbon polymer electrolyte having an aromatic ring. The aromatic ring as used herein may be a monocyclic ring, a condensed ring or a ring containing a hetero atom. Also, it may contain a substituent. Examples of the aromatic ring include a benzene ring, an imide ring, a naphthalene ring and a fluorene ring.

The proton-conducting group means a group which can dissociate protons. Examples of proton-conducting group include a sulfonic acid group, a carboxylic acid group, a hydroxyl group and a boronic acid group. From the viewpoint of proton conductance and easiness of introducing the proton-conducting group to polymer material, the sulfonic acid group is particularly preferable.

The proton-conducting group may be bound to the main backbone directly or indirectly through a linking group, or may be bound to the side chain of the main backbone. Examples of the linking group include an alkyl group, a ketone group, an ether group, a thioether group, a sulfonic group, a urethane group and amide group. Particularly, the alkyl group is preferable. From the viewpoint of improving proton density (enhancing IEC), it is preferable that the proton-conducting group is directly bound to the main backbone.

Example of preferred second repeating unit include one which has an aromatic ring in the main backbone-forming section and in which a proton-conducting group is bound to the aromatic ring directly or indirectly through the linking group. Particularly, a second repeating unit in which the proton-conducting group is bound to aromatic rings which form the main backbone directly is preferable. In this case, an aliphatic group or any of -O-, -S-, -SO-, -CO-, - C(CH₃)₂- and -C(CF₃)₂- may interpose between the aromatic rings which form the main backbone, and the aromatic rings may be directly bound each other.

The second repeating unit may contain an aliphatic group, a hetero atom or the like as the main backbone-forming section for the purpose of imparting and improving flexibility, synthesis ability or the like of the polymer electrolyte.

The polymer electrolyte material of the present invention comprises the first repeating and the second repeating unit as described above as essential repeating units. Further, the polymer electrolyte material of the present invention preferably comprises at least one kind of third repeating unit containing a structure represented by the following Formula (3) which forms the main backbone.

Formula (3) **-Ar¹-W-Ar²**

wherein, each of Ar¹ and Ar² is an aromatic ring; and W is at least one selected from -O-, -S-, -CO-, SO-, a single bond, -C(CH₃)₂- and -C(CF₃)₂-.

When the polymer electrolyte material of the present invention comprises the third repeating unit containing the structure represented by Formula (3) as the main backbone-forming section, flexibility of the polymer electrolyte material can be improved. Accordingly, when the polymer electrolyte material of the present invention is used as a polymer electrolyte for electrode, miscibility (mixing uniformity) with an electrode catalyst contained in a catalyst layer and adhesion at the interface between the electrode catalyst and the polymer electrolyte are improved so that contact between the electrode catalyst and the polymer electrolyte material is increased. Thereby, beneficial use efficiency of the electrode catalyst in the catalyst layer can be improved. In addition, when the polymer electrolyte material of the present invention comprises the third repeating unit, water resistance can also be increased.

Also, since the third repeating unit contains an aromatic ring, when the electrode catalyst in the state of being carried by a carbon particle such as graphite is contained in the catalyst layer, affinity of the polymer electrolyte material and the carbon particle is improved, so that contact of the electrode catalyst and the polymer electrolyte material is further improved. Thereby, beneficial use efficiency of the electrode catalyst in the catalyst layer can be further improved.

The aromatic ring in the third repeating unit as used herein is not particularly limited as long as it has aromatic property. It may be in a monocyclic structure, a condensed ring or a ring containing a hetero atom. Also, it may contain a substituent. The third repeating unit containing a benzene ring is preferable from the viewpoint of the purpose of containing the third repeating unit, that is, affinity with carbon materials such as graphite. From the above viewpoints, as the particularly preferable aromatic rings contained in the third repeating unit, there may be a benzene ring and a naphthalene ring. In Formula (3), each of Ar¹ and Ar² may be different or the same from each other.

In Formula (3), it is preferable that W is at least one selected from -O-, -S-, a single bond, - C(CH₃)₂- and -C(CF₃)₂-, from the viewpoint of flexibility of the polymer electrolyte material to be obtained.

The third repeating unit may contain a structure other than Formula (3) such as an aliphatic group, a hetero atom or the like as the main backbone-forming section, for the purpose of imparting and improving chemical stability, synthesis ability or the like.

The polymerization ratio of the first repeating unit and the second repeating unit may be appropriately adjusted in consideration of proton conductance, gas permeability, flexibility and the like of the polymer electrolyte material. The polymerization ratio "first repeating unit: second repeating unit (molar ratio)" is preferably 10 to 1: 1 to 8, more preferably 10 to 5: 2 to 5.
Also, when the third repeating unit is contained, the polymerization ratio thereof may be appropriately adjusted from the same viewpoint as the above. The polymerization ratio "first repeating unit: second repeating unit: third repeating unit (molar ratio)" is preferably 10 to 1: 1 to 8: 10 to 1, more preferably 10 to 5: 2 to 5: 10 to 5.
From the viewpoint of proton conductance, ion-exchange capacity is 0.5 meq/g or more, more preferably 0.8 meq/g or more.

The polymerization form of the polymer electrolyte material of the present invention is not particularly limited. Any of random copolymerization, graft copolymerization, block copolymerization, alternating copolymerization, and block-like random copolymerization may be used. Also, the molecular weight is not particularly limited. Generally, the weight average molecular weight is preferably from 1,000 to 100,000, more preferably from 3,000 to 10,000.
The polymer electrolyte material of the present invention may contain a repeating unit other than the first repeating unit, the second repeating unit and the third repeating unit in the range that the effect of the present invention in not prevented, and may contain a linking group which links a repeating unit and a block wherein repeating units are plurally bound.

The method of producing the polymer electrolyte material of the present invention is not particularly limited. The example includes a method which polymerizes monomer I which forms the first repeating unit, monomer II which forms the second repeating unit and monomer III which forms the third repeating unit. In this case, the polymerization method is not particularly limited. The polymerization can be performed by dissolving these monomers in an appropriate solvent followed by appropriately adding a catalyst, heating and so on. In addition, the proton-conducting group may be introduced by synthesizing a polymer using a monomer in the form of a protecting group and converting the protecting group to the proton-conducting group. If required, a polymerization atmosphere may be an inert atmosphere. The obtained polymer electrolyte material may be isolated by a separation method including reprecipitation using a poor solvent, filtration and drying.

The polymer electrolyte material of the present invention can be used in various fields. Examples of representative fields include solid polymer electrolyte membranes for fuel cells and solid polymer electrolytes contained in electrodes of fuel cells. Hereinafter, a membrane electrode assembly for fuel cell provided with a solid polymer electrolyte membrane and/or an electrode containing the solid polymer electrolyte of the present invention will be described.

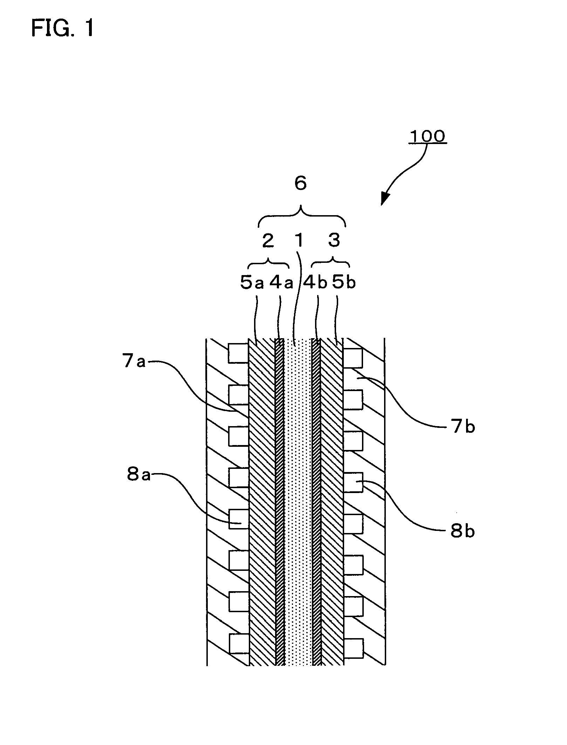

Hereinafter, a membrane electrode assembly for fuel cell (hereinafter, it may be simply referred to as a membrane electrode assembly) provided by the present invention will be described with reference to FIG. 1.
FIG. 1 is a sectional view schematically showing an embodiment of a unit cell (unit cell 100) provided with a membrane electrode assembly of the present invention.
The unit cell 100 is provided with a membrane electrode assembly 6, wherein a fuel electrode (anode) 2 is disposed on one surface of a polymer electrolyte membrane (hereinafter, it may be simply referred to as an electrolyte membrane) 1, and an oxidant electrode (cathode) 3 is disposed on the other surface of the solid polymer electrolyte membrane 1. The fuel electrode 2 has a structure in which a fuel electrode side catalyst layer 4a and a fuel electrode side gas diffusion layer 5a are laminated in this order from the electrolyte membrane 1 side. Similarly, the oxidant electrode 3 has a structure in which an oxidant electrode side catalyst layer 4b and an oxidant electrode side gas diffusion layer 5b are laminated in this order from the electrolyte membrane 1 side.

Each catalyst layer 4 (4a, 4b) contains an electrode catalyst having catalyst activity for the electrode reaction of each electrode (2, 3) and a polymer electrolyte material (hereinafter, it may be referred to as an electrolyte for electrode) which imparts proton conductance to the electrode. The electrolyte for electrode has functions such as ensuring the bonding ability between the electrolyte membrane and the electrode and an immobilization of the catalyst, besides imparting proton conductance. In this embodiment, both electrodes (the fuel electrode and the oxidant electrode) have the structure in which the catalyst layer and the gas diffusion layer are laminated. However, both electrodes may have a single layer structure including the catalyst layer alone or a structure provided with a function layer other than the catalyst layer and the gas diffusion layer.

The membrane electrode assembly 6 is interposed between separators 7a and 7b to constitute the unit cell 100. On one surface of each of the separators 7a and 7b, a groove to form a passage of each reaction gas (fuel gas, oxidant gas) is provided. Fuel gas passage 8a and oxidant gas passage 8b are defined by these grooves and outer side of the fuel electrode 2 or the oxidant electrode 3. The fuel gas passages 8a are passages to supply fuel gas (gas which contains or generates hydrogen) to the fuel electrode 2. The oxidant gas passages 8b are passages to supply oxidant gas (gas which contains or generates oxygen) to the oxidant electrode 3.

In the membrane electrode assembly, the polymer electrolyte material of the present invention can be used as an electrolyte for electrode constituting the catalyst layer of each electrode, besides being used as a material constituting the electrolyte membrane.
In the case of using the polymer electrolyte material as the material constituting the electrolyte membrane, the polymer electrolyte material is appropriately formed into a membrane in combination with other components such as other polymer electrolyte materials, if required. The thickness of the membrane is not particularly limited, but may be from about 5 to 200 µm. A method of producing the membrane is also not particularly limited. Examples of the methods include cast methods including casting and coating a solution containing the polymer electrolyte material, and drying, and doctor blade methods.

In the case of using the polymer electrolyte material as the electrolyte for electrode, the polymer electrolyte material is used together with the electrode catalyst having catalyst activity for the electrode reaction in each electrode to form the catalyst layer. The catalyst layer can be formed using a catalyst ink containing the polymer electrolyte material and the electrode catalyst.
As the electrode catalyst, generally, a catalyst in which catalytic components are carried by a conducting particle can be used. The catalytic component is not particularly limited if a catalytic component has catalyst activity to the oxidation reaction of fuels in the fuel electrode or the reduction reaction of oxidants in the oxidant electrode. A catalytic component generally used for solid polymer electrolyte fuel cells can be used. For example, platinum and alloys of platinum and metal such as ruthenium, iron, nickel, manganese, cobalt and copper can be used. As the conducting particle being a catalyst carrier, conductive carbon materials including carbon particles such as carbon black and carbon fibers, and metallic materials such as metallic particles and metallic fibers can be used.

The catalyst ink can be obtained by dissolving or dispersing the above electrode catalyst and electrolyte for electrode in a solvent. The solvent of the catalyst ink may be appropriately selected. The examples include alcohols such as methanol, ethanol and propanol, organic solvents such as N-methyl-2-pyrolidone (NMP) and dimethyl sulfoxide (DMSO), mixtures thereof, and mixtures of these organic solvents and water. The catalyst ink may contain other components such as a binder and a water-repellent resin, if required, besides the electrode catalyst and the electrolyte.

A method of forming the catalyst layer is not particularly limited. For example, the catalyst layer may be formed on a surface of a gas diffusion layer sheet by coating the catalyst ink on the surface of the gas diffusion layer sheet followed by drying, or the catalyst layer may be formed on a surface of the electrolyte membrane by coating the catalyst ink on the surface of the electrolyte membrane followed by drying. Alternatively, the catalyst ink is coated on a surface of a transfer substrate and then dried to produce a transfer sheet, and the transfer sheet is bound together with the electrolyte membrane or the gas diffusion sheet by hot press or the like, thereby the catalyst layer may be formed on the surface of the electrolyte membrane or the gas diffusion layer sheet.

A coating and drying method of the catalyst ink may be appropriately selected. Examples of the coating methods include spraying methods, screen printing methods, doctor blade methods, gravure printing methods and die-coating methods. Examples of the drying methods include methods of drying under reduced pressure, drying by heating and drying by heating under reduced pressure. Specific conditions in the method of drying under reduced pressure and drying by heating are not limited, and may be set appropriately.
The amount of coating of the catalyst ink varies by a composition of the catalyst ink, catalytic performance of catalytic metal used in an electrode catalyst. The amount of catalytic component per unit area may be from about 0.01 to 1.0 mg/cm². Also, the thickness of the catalyst layer is not particularly limited, but may be from about 1 to 100 µm.

The gas diffusion layer sheet, which forms the gas diffusion layer, may be made of a conductive porous body which has gas diffuseness sufficient to efficiently supply gas to the catalyst layer, conductive property, and strength required as material constituting the gas diffusion layer. The examples include conductive porous bodies including carbonaceous porous bodies such as carbon paper, carbon cloth and carbon felt; and metallic mesh or metallic porous bodies constituted by metal such as titanium, aluminum, copper, nickel, nickel chrome alloys, copper, copper alloys, silver, aluminum alloys, zinc alloys, lead alloys, titanium, niobium, tantalum, iron, stainless, gold and platinum. The thickness of the conductive porous body is preferably from about 10 to 500 µm.

The gas diffusion layer sheet may be formed of a single layer of the above conductive porous body. A water-repellent layer can be provided on the surface, which faces to the catalyst layer, on the gas diffusion layer sheet. The water-repellent layer generally has a porous structure containing conductive particulates such as carbon particles or carbon fibers and water-repellent resins such as polytetrafluoroethylene (PTFE). The water-repellent layer is not always necessary. However, the water-repellent layer has advantages of being able to improve electrical interengagement between the catalyst layer and the gas diffusion layer in addition to being able to increase drainage ability of the gas diffusion layer while reasonably keeping the amount of water contained in the catalyst layer and the electrolyte membrane.

A method of forming the water-repellent layer on the conductive porous body is not particularly limited. For example, a water-repellent layer ink, in which the conductive particulates such as carbon particles, the water-repellent resins and other components, if necessary, are mixed into a solvent including an organic solvent such as ethanol, propanol and propylene glycol, water or a mixture thereof, is coated at least on the surface of the conductive porous body, which faces the catalyst layer, and then dried and/or baked. The thickness of the water-repellent layer may be generally from about 1 to 300 µm. Examples of a method of coating the water-repellent layer ink on the conductive porous body include screen printing methods, spraying methods, doctor blade methods, gravure printing methods and die-coating methods.

In addition, in order to efficiently discharge moisture in the catalyst layer out of the gas diffusion layer, the conductive porous body may be processed by impregnating and coating the water-repellent resin such as polytetrafluoroethylene on the surface which faces the catalyst layer by means of a bar coater or the like.
The electrolyte membrane and the gas diffusion layer sheet having the catalyst layer formed by the above method are bound each other by appropriately being laminated and subjected to hot press. Thereby, the membrane electrode assembly can be obtained.

The obtained membrane electrode assembly is further interposed between separators, thereby, a unit cell is formed. Examples of the separators include carbon separators made of a carbon/resin composite, which contains carbon fibers at high concentration, and metallic separators using metallic materials. Examples of the metallic separators include separators made of metallic materials having excellent corrosion-resistance and separators subjected to coating which increases corrosion-resistance by covering the surface with carbon or metallic materials having excellent corrosion-resistance.

The membrane electrode assembly of the present invention may contain the polymer electrolyte material of the present invention in at least one of the electrolyte membrane and the electrode. The polymer electrolyte material according to the present invention may be contained either in the electrolyte membrane alone or in the electrode alone, or both in the electrolyte membrane and the electrode. As described above, since the polymer electrolyte material of the present invention has excellent gas permeability, particularly excellent effect can be obtained when the polymer electrolyte material is used as an electrolyte for electrode and contained in the electrode, in particular cathode (oxidant electrode in this embodiment).
In addition, the membrane electrode assembly of the present invention can use other polymer electrolyte materials in the range that the effect of the present invention can be obtained, if the polymer electrolyte material of the present invention is used for at least one of the electrolyte membrane and the electrode. As the above other polymer electrolyte materials, general polymer electrolyte materials may be used. The examples include fluorine polymer electrolytes such as perfluorocarbon sulfonic acid, and hydrocarbon polymer electrolytes having proton-conducting groups such as a sulfonic acid group, a phosphoric acid group and a carboxylic acid group introduced into a hydrocarbon polymer such as polyether ether ketone, polyether ketone and polyether sulfone.

As described above, since the polymer electrolyte material of the present invention is particularly suitable for the polymer electrolyte for electrode because of excellent gas permeability and also has excellent bonding ability with the hydrocarbon polymer electrolyte, a membrane electrode assembly provided with a catalyst layer containing the polymer electrolyte material of the present invention as a polymer electrolyte for electrode and a hydrocarbon polymer electrolyte membrane can exhibit high power generation performance. This is because the catalyst layer having excellent gas permeability contributes to high power generation efficiency since it supplies gas efficiently to the electrode catalyst, and proton conductance in the interface between the catalyst layer and the electrolyte membrane is high since bonding ability therebetween is excellent.

### Examples

### [Synthesis of random poly(siloxane-imide) electrolyte]

In the following synthesis of random poly(siloxane-imide) electrolyte, 1,2,5,8-tetracarboxylic dianhydride (NTDA), 2,2'-benzidinedisulfonic acid (BDSA), 4,4'-diaminodiphenyl ether (ODA) (they are manufactured by Tokyo Chemical Industry Co., Ltd.) and amino-terminated polydimethylsiloxane (PDMS) (manufactured by Gelest) were dried under reduced pressure and used. m-Cresol, tetrahydrofuran (THF), triethylamine and benzoic acid (they are manufactured by Kanto Kasei Ltd.) are commercial products and they were used as they were.

[Chemical formula 5]

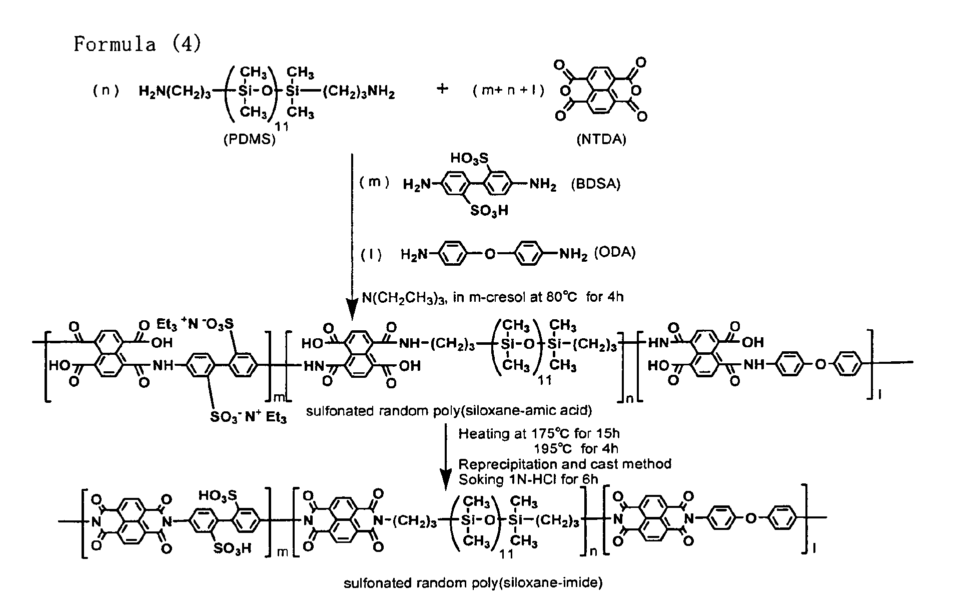

Sulfonated random poly(siloxane-imide) was synthesized in accordance with the scheme represented by the above Formula (4).
Firstly, m-Cresol (6 ml), NTDA (3 mmol) and PDMS (0.3 mmol) were charged in a 50 ml three-neck flask and agitated at room temperature for 3 hours while carrying out a nitrogen flow. A solution in which BDSA (1.5 mmol), ODA (1.2 mmol) and triethylamine (3.2 mmol) were completely dissolved in m-Cresol (6 ml) was added in the above resultant solution, and then agitated at room temperature for 2 hours.

Next, benzoic acid was added as a catalyst and agitated at 80 °C for 4 hours, thereby, ammoniated sulfonic acid random poly(siloxane-amic acid) was obtained.

Further, the resultant was agitated at 175 °C for 15 hours and at 195 °C for 4 hours. After cooling it to 80 °C, 3 ml of m-cresol was added therein, and then it was reprecipitated in acetone. A solid obtained by filtration was washed with acetone for two to three times, and then it was dried under reduced pressure at 60 °C to obtain a dark brown solid. The obtained dark brown solid was dissolved in m-cresol and was used to form a membrane by a cast method. Then, the membrane was soaked in 1N-HCl for 6 hours to convert ammoniated sulfonic acid to a sulfonic acid group.

As shown in Table 1, the molar ratio of BDSA, PDMA and ODA being diamine (BDSA: PDMA: ODA) was changed and polymer electrolyte materials of Examples 1 and 2 and Comparative example 1 were synthesized.

### [Evaluation of polymer electrolyte material]

Flexibility of membranes, ion-exchange capacity (IEC) and proton conductivity of the above obtained polymer electrolyte material of Examples 1 and 2, and Comparative example 1 were measured. Results are shown in Table 1.
Each item of evaluation was measured below.

### (Flexibility of membranes)

A polymer electrolyte material was dissolved in a solvent (NMP) and used to form a polymer electrolyte membrane by a cast method. Then, the membrane was observed by visual inspection and a bending test, and evaluated based on the following criteria.
⊚: no split etc. was observed and no break was observed when bended.
○: no split etc. was observed and breaks were observed when bended in half.
×: splits etc. were observed and breaks were observed when bended.

### (Ion-exchange capacity)

Firstly, a polymer electrolyte material was dissolved in a solvent (NMP) and used to form a polymer electrolyte membrane by a cast method. After ion exchange was carried out on the polymer electrolyte membrane by a NaCl aqueous solution, the polymer electrolyte membrane was titrated by a 0.02N NaOH aqueous solution (defined by pH = 7). Next, the membrane for test was soaked in a 0.1N HCl aqueous solution for 2 hours and rinsed by ultrapure water followed by being vacuum-dried at 60 °C for 1 hour.
The ion-exchange capacity was calculated from the results of weight measurement and titration.

### (Proton conductivity)

A polymer electrolyte membrane which was formed in the same manner as the above evaluation of flexibility of membranes was soaked in boiling water for 30 minutes, and then, the proton conductivity under the conditions of 80 °C and 95 %RH was measured.

**Table 1**

| | BDSA/PDMS/ODA | Flexibility of membranes | IEC | Ratio of PDMS [wt%] | Proton conductivity (after hot-water treatment) [Scm⁻¹] |
|---|---|---|---|---|---|
| Comparative example 1 | 5/0/5 | ⊚ | 1.85 | 0 | 5.0×10⁻² |
| Example 1 | 5/1/4 | ⊚ | 2.29 | 15 | 1.3×10⁻¹ |
| Example 2 | 6/1/3 | ⊚ | 2.42 | 14.8 | 1.3×10⁻¹ |

As shown in Table 1, compared to the polymer electrolyte resin of Comparative example 1, the polymer electrolyte resins of Examples 1 and 2 containing PDMS (first repeating unit) can improve proton conductivity while keeping the flexibility.

### (Evaluation of power generation performance)

### <Production of unit cell for fuel cell>

### (1) Example 3

A commercial Pt/C catalyst (rate of supported Pt: 50 wt%), the polymer electrolyte material of Example 1 and a solvent (NMP) were agitated and mixed so that the weight ratio of carbon and polymer electrolyte material (C: polymer electrolyte material) is 1: 0.75. Thus, a catalyst ink for cathode was prepared.
The above catalyst ink for cathode was coated with a spray on one surface of a perfluorocarbon sulfonic acid resin membrane (product name: Nafion), so that the Pt amount per unit area of the catalyst layer was 0.5 mg/cm². The ink was vacuum-dried at 80 °C. Thus, a catalyst layer for cathode was formed.

A catalyst ink for anode was prepared similarly as the above catalyst ink for cathode except for using a perfluorocarbon sulfonic acid resin (product name: Nafion) instead of the polymer electrolyte material of Example 1.
A catalyst layer for anode was formed on the other side of the above perfluorocarbon sulfonic acid resin membrane (product name: Nafion) using the above catalyst ink for anode similarly as the catalyst layer for cathode.

The obtained assembly of a catalyst layer, an electrolyte membrane and a catalyst layer in this order (catalyst layer/electrolyte membrane/catalyst layer assembly) was interposed between two sheets of carbon paper for gas diffusion layer, and subjected to hot press (press pressure: 2 MPa; press temperature: 100 °C). Thereby, a membrane electrode assembly was obtained.
The obtained membrane electrode assembly was interposed between two sheets of carbon separator (gas passage: serpentine), thereby, a unit cell was produced.

### <Power generation test>

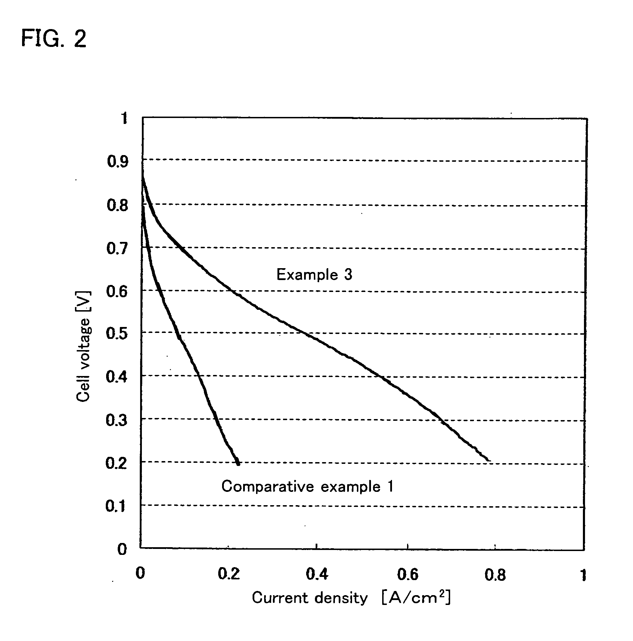

The unit cell produced as above was subjected to power generation evaluation under the following conditions. Results are shown in FIG. 2.

### <Conditions of power generation evaluation>

Fuel (hydrogen gas): 300 ml/min (100 %RH)
Oxidant (air): 1,000 ml/min (100 %RH)
Cell temperature: 80 °C

### (2) Example 2

A unit cell was produced similarly as Example 3 except that a polyether sulfone based polymer electrolyte (PES based polymer electrolyte) was used instead of the polymer electrolyte material of Example 1 contained in the catalyst layer for cathode in Example 3, and power generation evaluation was performed. Results are shown in FIG. 2.

As shown in FIG. 2, the unit cell of Example 3, which used the polymer electrolyte material of the present invention having the -S-O-structure in the main backbone as the polymer electrolyte for cathode electrode, exhibited considerably high voltage in all range of current density, compared to the unit cell of Comparative example 2, which used the PES based polymer electrolyte not having the -S-O-structure in the main backbone.
Particularly, it was confirmed that the unit cell of Example 3 could produce electricity up to 0.8 A/cm², while the unit cell of Comparative example 2 could not produce electricity in the current density range exceeding about 0.2 A/cm². Furthermore, the unit cell of Example 3 could obtain sufficiently high voltage even in the high current density range in which the unit cell of Comparative example 2 could not produce electricity. It is presumed that diffuseness of reaction gas was ensured under conditions of high-load operation, in which flooding is easily caused, in Example 3, since the polymer electrolyte material of the present invention has excellent gas permeability.

## Claims

1. A polymer electrolyte material comprising at least a first repeating unit containing a Si-O bond which forms a main backbone and a second repeating unit containing an aromatic ring and a proton-conducting group.

2. The polymer electrolyte material according to Claim 1, wherein the first repeating unit is at least one kind of repeating unit containing a siloxane structure represented by the following Formula (1): 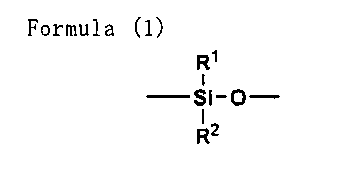 wherein, R¹ and R² are respectively one selected from the group consisting of an aliphatic group and an aromatic group.

3. The polymer electrolyte material according to Claim 1 or 2, wherein the second repeating unit is at least one kind of repeating unit containing an aromatic ring which forms the main backbone.

4. The polymer electrolyte material according to Claim 3, wherein the second repeating unit is at least one kind of repeating unit having a structure in which the proton-conducting group is bound to the aromatic group which forms the main backbone directly or indirectly through a linking group.

5. The polyelectrolyte according to any of Claims 1 to 4 further comprising at least one kind of third repeating unit containing a structure represented by the following Formula (3) which forms the main backbone:
Formula 3 **-Ar¹-W-Ar²**
wherein, each of Ar¹ and Ar² is an aromatic ring; and W is at least one selected from -O-, -S-, -CO-, SO-, a single bond, -C(CH₃)₂- and -C(CF₃)₂-.

6. A membrane electrode assembly for fuel cell comprising a polymer electrolyte membrane and/or a catalyst layer containing the polymer electrolyte material defined by any of Claims 1 to 5.

7. The membrane electrode assembly for fuel cell according to Claim 6 comprising the catalyst layer containing the polymer electrolyte material and a hydrocarbon polymer electrolyte membrane
